# DEMANDE DE BREVET EUROPEEN

(11) **EP 4 653 399 A1**
(43) Date de publication de la demande: **26.11.2025**
(21) Numéro de dépôt: 25171279.0
(22) Date de dépôt: 17.04.2025
(51) Int. Cl.: C03B 5/235, C03B 5/24, F27B 3/20

(54) **PROCÉDÉ DE FUSION À MULTIPLE FLAMMES IMPACTANTES**

(30) Priorité: 23.05.2024 FR 2405260
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BARIKI, Chaimae, 78350 Les Loges en Josas (FR); TSIAVA, Rémi, 78350 Les Loges en Josas (FR)
(74) Mandataire: Air Liquide

(57) **Abrégé**

L'invention conceme un procédé de fusion, procédé dans lequel des infondus forment un talus 30 s'appuyant d'un côté contre la paroi amont 11 du four 10 et présentant du côté opposé une surface libre 40 ; les infondus sont chauffés au moyen d'au moins trois flammes 51, 52, 53 à puissance et à impulsion régulées et dirigées vers la surface libre 40 de manière à définir, sur cette surface libre 40 des zones d'impact 41, 42, 43 à au moins trois distances 11, 12, 13 différente d'une des parois latérales 13, 13' du four 10.

## Description

La présente invention concerne les procédés et les fours de fusion.

Il est connu dans des procédés de fusion d'introduire la charge non encore fondue (charge solide), ci-après les « infondus », dans le four par des enfourneuses (en anglais: "chargers").

En attendant leur fusion, les infondus forment un talus (en anglais "bank") d'infondus de largeur égale à la largeur du four et de hauteur plus ou moins importante, pouvant même atteindre la voûte du four.

Par exemple, dans le cas de certains fours de fusion de verre connus, ces infondus flottent sur le bain de matières premières déjà fondues comme un tapis et se disloquent en plusieurs petits îlots au fur et à mesure qu'ils avancent dans le four avant leur fusion totale.

Le talus présente une surface libre globalement inclinée par rapport à la verticale.

Dans le cas d'un four de fusion à combustion, au moins une partie de l'énergie thermique nécessaire pour la fusion progressive de la charge solide dans le talus est fournie par un ou plusieurs brûleurs montés dans le four. Il est notamment connu de diriger des flammes vers le talus d'infondus, et en particulier vers la surface libre inclinée du talus pour provoquer la fusion des infondus. Dans ce cas, la surface libre inclinée constitue un front de fusion pour les infondus dans le talus.

Afin d'assurer une qualité élevée des produits fabriqués à partir de la charge fondue issue du four, la charge fondue doit être homogène et, en particulier, sans traces d'infondus à la sortie du four.

Pour cela, il est essentiel que le front de fusion du talus se situe à une certaine distance de la sortie du four.

Or, on observe que, dans les procédés connus, des variations de la position et/ou de la forme du front de fusion sur la largeur du four, et par conséquent des différences dans la distance entre le talus d'infondus et la sortie du four sur cette largeur.

Les causes de telles différences dans les distances peuvent être incidentelles, par exemple un effondrement accidentel d'une section de la surface libre du talus, ou structurelles, par exemple à cause de la friction entre le talus et les parois latérales ou dans le cas d'une introduction des infondus ou d'une évacuation de la charge fondue non pas selon l'axe longitudinale du four, mais à travers d'une paroi latérale.

Il est, en principe, possible de faire fonctionner le four de manière à éloigner la surface libre du talus davantage de la sortie du four. Toutefois, dans ce cas la productivité du four s'en trouve réduite.

Ce qui plus est, certaines charges subissent des dégradations quand leur température dépasse une valeur limite.

Une bonne maîtrise de la chauffe et de la fusion de la charge solide présente dans le talus est donc essentielle.

Chauffer la surface libre inclinée d'un talus avec une seule flamme ou deux dirigées vers la surface libre du talus pour obtenir une fusion contrôlée du front de fusion est un défi, en particulier quand les infondus ont une conductivité thermique faible.

En effet, la distribution de l'énergie thermique conférée aux infondus dépend de la géométrie de la flamme et de son orientation vers la surface cible, l'énergie thermique étant essentiellement conférée par la flamme aux infondus au niveau de l'intersection de la flamme avec la surface libre en défaveur des autres sections de la surface libre non impactées par la flamme. Ce qui plus est, quand l'intersection de la flamme avec la surface libre comporte des zones plus proches et des zones plus éloignées du brûleur générant la flamme, ceci conduit à une distribution de l'énergie thermique en faveur de la ou des zones plus proches et en défaveur de la ou les zones plus éloignées du brûleur.

Il en résulte une hétérogénéité de chauffe et un déséquilibre dans la fusion du talus : la zone qui reçoit le plus d'énergie va fondre en priorité laissant un creux dans le talus à la place. Les zones du talus recevant moins d'énergie seront en retard de fusion, et peuvent, par exemple, dans un four continu, avancer avec la charge fondue en direction de la sortie du four.

L'hétérogénéité de chauffe impose ainsi au conducteur de four de ralentir le chargement de matières premières afin d'assurer la fusion complète, et le cas échéant l'affinage de la charge fondue dans le four, ce qui se traduit par une baisse de production.

Ce problème est particulièrement prononcé dans le cas des infondus avec une faible conductivité de chaleur. En effet, dans le cas d'une charge solide à faible conductivité thermique, les particules d'infondus ne transmettant alors pas ou peu de chaleur entre elles et la chaleur de combustion reçue par la surface libre du talus n'atteignant pas ou seulement lentement les infondus à l'intérieur du talus.

La présente invention a pour but de remédier au moins en partie au problème décrit ci-dessus.

A cette fin, l'invention propose un procédé de fusion dans un four. Le four présente une zone de fusion située entre une paroi amont, une paroi aval à l'opposé de la paroi amont, une première paroi latérale, une deuxième paroi latérale, une voûte et une sole. Les deux parois latérales relient la paroi amont et la paroi aval. La distance entre les deux parois latérales définit la largeur 1 du four. La distance entre la paroi amont et la paroi aval définit la longueur L du four. La distance entre la sole et la voûte correspond à la hauteur du four.

Suivant l'invention, des infondus sont introduits dans le four à travers ou du côté de la paroi amont par une ou plusieurs enfourneuses.

Dans le présent contexte, on comprend par « du côté d'une paroi » : dans la moitié de la longueur du four adjacente à ladite paroi, de préférence dans le tiers, voire dans le quart ou dans le cinquième, de la longueur du four adjacent(e) à ladite paroi.

Dans le four, les infondus forment un talus s'appuyant d'un côté contre la paroi amont. Du côté opposé, le talus présente une surface libre qui est généralement inclinée par rapport à la verticale.

Les infondus dans le talus sont chauffés au moyen de flammes avec obtention d'une charge fondue, cette charge fondue est évacuée du four à travers d'une sortie dans ou du côté de la paroi aval.

Suivant l'invention, au moins trois flammes sont ainsi dirigées vers la surface libre, chacune de ces flammes définissant une zone d'impact sur la surface libre du talus. Lesdites flammes sont plus particulièrement dirigées vers la surface libre de manière à définir sur cette surface libre des zones d'impact à au moins trois distances différentes de la première paroi latérale.

Par distance entre une zone d'impact et un autre élément, telle qu'une paroi, on comprend dans le présent contexte la distance entre le centroïde ou centre de masse de cette zone d'impact et l'autre élément.

Également suivant l'invention, l'énergie thermique transférée au talus par chacune de ces flammes dans sa zone d'impact est régulée en régulant la puissance de la flamme.

Ce qui plus est, l'impulsion de chacune de ces flammes est régulée de manière à ce que la flamme impacte la surface libre dans sa zone d'impact sans dégradation mécanique par la flamme de l'intégrité structurelle du talus dans cette zone d'impact.

Le procédé suivant l'invention présente plusieurs avantages.

La chauffe par les flammes des infondus dans le talus est distribuée sur la largeur du four et donc sur la largeur du talus.

L'énergie thermique transférée à chaque zone d'impact est régulée. Ainsi, il est possible de chauffer certaines zones d'impact plus ou moins que d'autres zones d'impact et ainsi d'optimiser le processus de fusion dans chaque zone d'impact et donc aussi la position longitudinale de cette zone du front de fusion dans le four. Une telle régulation permet également d'éviter de surchauffer les infondus, ce qui est important dans le cas d'infondus pouvant subir une baisse de qualité en cas de surchauffe.

Finalement, la régulation de l'impulsion des flammes assure que chacune des flammes dirigées vers la surface libre du talus atteint, c'est-à-dire impacte effectivement, cette surface libre, mais avec une impulsion telle que la flamme ne dégrade pas mécaniquement l'intégrité structurelle du talus dans sa zone d'impact.

Dans ce contexte, distinction est faite entre, d'une part, la fusion recherchée des infondus dans le talus et son effet sur la forme et la structure du talus et, d'autre part, la dégradation mécanique du talus, notamment par entraînement mécanique d'infondus du talus par les flammes et par les gaz de combustion. Une telle dégradation mécanique peut notamment résulter (i) en la présence d'infondus dans la charge fondue évacuée du four ou en une charge fondue insuffisamment affinée, (ii) en la dégradation de l'intérieur du four par les infondus entraînés et (iii) en la perte d'infondus évacués du four avec les fumées de combustion.

Comme indiqué ci-dessus, les flammes sont dirigées vers la surface libre de manière à définir au moins trois zones d'impact à des distances différentes de la première paroi latérale. Une telle configuration se distingue donc clairement d'un procédé de combustion dans lequel on génère une multitude de flammes, mais dans lequel les flammes fusionnent en une seule flamme en aval du brûleur et en amont de la surface libre. En effet, une telle flamme fusionnée définirait une seule zone d'impact sur la surface libre et non pas une multitude de zones d'impact à des distances différentes de la première paroi latérale, comme c'est le cas pour la multitude de flammes impactantes suivant la présente invention.

Il est à noter que la présente invention n'exclut pas la présence dans le four de moyens de chauffe autre que les flammes dirigées vers la surface libre susmentionnées. De tels autres moyens de chauffe peuvent notamment inclure des éléments de chauffage électrique et/ou des flammes non-dirigées vers la surface libre inclinée du talus, par exemple au-dessus de ou submergées dans la charge fondue dans une zone d'affinage.

Le procédé proposé avec, d'une part, sa régulation de la puissance des flammes impactantes et, d'autre part, sa régulation de l'impulsion des flammes impactantes, permet ainsi de résoudre les déséquilibres dans la position de la surface libre du talus observés dans les procédés de fusion connus et par conséquent d'augmenter la production du four tout en assurant l'homogénéité et l'absence d'infondus dans la charge fondue évacuée du four. La fusion mieux répartie sur la surface libre inclinée correspondant au front de fusion du talus conduira à une optimisation de l'utilisation de l'énergie thermique des flammes, une économie d'énergie qui sera d'autant plus importante quand on associe au procédé un système de récupération d'énergie thermique des fumées évacuées du four. L'énergie ainsi récupérée peut avantageusement être utilisée pour chauffer un ou des réactifs de combustion (comburant et/ou combustible) par l'intermédiaire d'un récupérateur et/ou pour préchauffer au moins une fraction des infondus avant leur introduction dans le four.

Comme indiqué ci-dessus, suivant le procédé de l'invention, les flammes sont dirigées vers la surface libre de manière à définir des zones d'impact sur la surface libre qui se situent à différentes distances de la première paroi latérale (et donc également à différentes distances de la deuxième paroi latérale, la zone d'impact la plus éloignée de la première paroi latérale étant la zone d'impact la plus proche de la deuxième paroi latérale).

Suivant une forme de réalisation, au moins quatre flammes sont dirigées vers la surface libre de manière à définir au moins quatre zones d'impact sur la surface libre à des distances différentes de la première paroi latérale. Optionnellement, au moins cinq flammes sont dirigées vers la surface libre de manière à définir au moins cinq zones d'impact sur la surface libre à des distances différentes de la première paroi latérale.

Le nombre de zones d'impact choisi dépendra de la largeur l du four et de la forme et de la taille, en particulier la dimension horizontale, des zones d'impact. L'utilisation d'un faible nombre de zones d'impact de dimension horizontale importante permet de simplifier le contrôle du procédé de fusion dans le sens où le nombre de flammes dont la puissance et l'impulsion est à réguler est relativement faible. L'utilisation d'un nombre de zones d'impact plus important permet une régulation plus localisée et donc plus précise du front de fusion du talus, mais nécessite un contrôle/une régulation plus complexe.

Les distances entre les zones d'impact et la première paroi latérale sont de préférence réparties sur toute la largeur l du four. Les zones d'impact peuvent, par exemple, être réparties sur la largeur l du four de manière en substance équidistante (c'est-à-dire avec une même différence de la distance entre la zone d'impact et la première paroi latérale pour chaque pair de zones d'impact successives).

Dans le cas d'un nombre impair de zones d'impact, une des zones d'impact sera typiquement située au milieu transversal du four (c'est-à-dire à une distance de la première (et de la deuxième) paroi latérale correspondant à la moitié de la largeur l du four), les autres zones d'impact étant situées de chaque côté de cette zone d'impact centrale, typiquement en nombre égal.

Suivant une forme de réalisation préférée, les distances entre les zones d'impact et la première paroi latérale sont réparties de manière symétrique sur la largeur l du four par rapport à la moitié de la largeur l.

Deux zones d'impact adjacentes peuvent se recouvrir partiellement.

Suivant une forme de réalisation préférée et afin d'assurer une bonne distribution de la chauffe et de la fusion de la surface libre impactée, chacune des zones d'impact recouvre partiellement la zone d'impact la plus proche.

La taille et la forme d'une zone d'impact dépendent de la géométrie de la flamme et de la surface libre impactée, plus particulièrement de la longueur de la flamme (distance entre la racine de la flamme et sa zone d'impact sur la surface libre du talus, de la section transversale de la flamme, qui est définie par le brûleur générant la flamme, de l'angle d'ouverture de la flamme impactante et de la forme et de l'inclinaison de la surface libre impactée.

Suivant une forme de réalisation, les flammes sont des flammes à injection étagée de combustible et/ou de comburant. La combustion étagée est décrite dans les livres de référence "Oxygen-Enhanced Combustion", première édition: ISBN 0-8493-1695-2, page 52, et dans "Oxygen-Enhanced Combustion", seconde édition: ISBN 978-1-4398-6228-5, page 458, les deux édités par Charles E. Baukal Jr.. Elle permet notamment de réduire la quantité de NOx générée par la combustion. Ce qui plus est, un positionnement approprié des injections de combustible et/ou de comburant étagé (tel qu'un positionnement des injections étagé espacé dans un plan horizontal de la ou des injections primaires) permet également d'obtenir une flamme avec une section transversale particulière, telle qu'une section transversale avec une dimension horizontale plus grande que sa dimension verticale, telle qu'une flamme dite "flamme plate" (en anglais: "flat flame").

D'autres moyens, tels que, par exemple, un brûleur avec une seule buse d'injection avec une dimension horizontale plus grande que sa dimension verticale, peuvent également être mis en œuvre afin de réaliser une telle flamme.

Comme indiqué précédemment, le nombre de zones d'impact choisi dépendra entre autres de la dimension horizontale des zones d'impact, dimension horizontale qui dépend à son tour de la largeur de la section transversale de la flamme quand celle-ci impacte la surface libre du talus. Plus la dimension horizontale des zones d'impact est grande, moins de zones d'impact sont nécessaires pour couvrir la surface libre du talus sur toute la largeur l du four.

Ainsi, suivant une forme de réalisation utile, la ou les flammes qui correspondent à une zone d'impact qui n'est pas adjacente à une paroi latérale, voire l'ensemble des flammes impactantes, présentent une section transversale avec une dimension horizontale et une dimension verticale, la dimension horizontale étant plus grande que la dimension verticale, comme c'est notamment le cas pour une flamme plate.

Cette section transversale de la ou des flammes peut notamment être en substance rectangulaire.

Par dimension horizontale d'une section transversale ou d'une zone on comprend la dimension selon une ligne droite horizontale la plus grande d'une extrémité à une autre de ladite section ou de ladite zone. Par dimension verticale d'une section transversale ou d'une zone on comprend la dimension selon une ligne droite perpendiculaire à cette ligne droite horizontale et donc située dans un plan vertical.

Pour une meilleure gestion du procédé de fusion, il peut également être utile de détecter la position, sur la longueur du four, d'une section de la surface libre du talus, cette section correspondant avantageusement à une zone d'impact, cette position étant également désignée par "état d'avancement", car elle correspond à un état d'avancement des infondus vers la sortie du four pour la charge fondue. Cette position peut, par exemple, être exprimée comme la distance entre la paroi amont et la section, une distance plus grande entre la paroi amont et la section signifiant alors un rapprochement entre la section en question et la sortie du four. La position peut également être exprimée comme la distance entre la section et la paroi aval, dans quel cas une distance plus faible indique un rapprochement entre la section et la sortie du four.

Suivant une forme de réalisation préférée, la position est détectée de plusieurs sections de la surface libre, voire de chaque section de la surface libre correspondant à une zone d'impact.

La détection de la position d'une ou des sections de la surface libre du talus peut être réalisée au moyen d'imagerie thermique ou optique, voire d'une combinaison des deux.

Comme indiqué précédemment, une position d'une section trop proche de la sortie du four augmente le risque d'une présence d'infondus dans la charge fondue évacuée et/ou d'un affinage incomplet de la charge fondue en amont de cette sortie.

Suivant une forme de réalisation avantageuse, on détecte si ladite section atteint une distance d'avancement prédéfinie correspondant à un rapprochement maximal permit entre la section et la paroi aval. Cette distance d'avancement prédéfinie correspond à un avancement de la section en question vers la paroi aval au-delà de sa position recherchée. Quand la section atteint cette distance d'avancement prédéfinie on augmente la puissance de la flamme qui correspond à la zone d'impact de cette section. De cette manière, il est possible de provoquer une fusion plus rapide des infondus au niveau de cette section et ainsi un recul de cette section de la surface libre vers sa position recherchée.

Suivant une autre forme de réalisation, qui peut être combinée avec la forme de réalisation précédente, ou pas, on détecte si ladite section atteint une distance, dite "distance de recul" prédéfinie correspondant à un rapprochement maximal permit entre la section et la paroi amont. Cette distance de recul prédéfinie correspond à un retrait de la section de la surface libre par rapport à sa position recherchée. Quand la section en question n'atteint pas cette distance de recul prédéfinie, on réduit la flamme qui correspond à la zone d'impact de cette section. De cette manière, il est possible de ralentir la fusion des infondus dans cette section et à terme, notamment avec l'introduction d'infondus additionnels dans le four, d'amener cette section de la surface libre vers sa position recherchée.

Comme déjà indiqué ci-dessus, suivant la présente invention, l'impulsion de chaque flamme dirigée vers la surface libre est régulée de manière à ce que la flamme impacte la surface libre dans sa zone d'impact et ceci sans dégradation mécanique par la flamme de l'intégrité structurelle du talus dans la zone d'impact de la flamme. Par conséquent, quand la position d'une section de la surface libre du talus ne correspond pas ou plus à sa position recherchée, un ajustement de l'impulsion de la flamme correspondante peut également être nécessaire afin d'assurer que cette flamme impacte cette section la surface libre à sa position réelle et/ou afin d'éviter une dégradation mécanique par la flamme de l'intégrité structurelle de cette section du talus.

Quand on détecte ainsi la position de plusieurs sections de la surface libre inclinée du talus, la distance d'avancement prédéfinie et/ou la distance de recul prédéfinie pour les différentes sections peuvent être identiques ou différentes en fonction des particularités du four, comme, par exemple, le positionnement central ou excentrique de la sortie pour la charge fondue.

La position réelle d'une section de la surface libre inclinée du talus dans le four peut, par exemple, varier en fonction de la production du four (également appelée la « tirée » dans le cas d'un four de fusion continu), en fonction de la nature des infondus introduits dans le four et/ou de la charge fondu à obtenir. Dans le cas d'un four discontinu (souvent appelé « four batch »), ou d'un four semi-continu (souvent appelé « four semi-batch »), la position des sections de la surface libre inclinée peut notamment varier au cours de la fusion, le front de fusion avançant ainsi vers la sortie du four après l'introduction d'un « batch » d'infondus et reculant vers la paroi amont au fur et à mesure que la fusion des infondus avance. Par conséquent, dans ce type de procédé, la position recherchée des sections de la surface libre inclinée évolue dans le temps. Suivant une forme de réalisation adaptée au fours discontinus ou semi-continus, il est possible d'utiliser une distance d'avancement prédéfinie et/ou la distance de recul prédéfinie qui varient également dans le temps en parallèle avec l'évolution de sa position recherchée.

Dans le présent contexte, on comprend par un procédé ou un four de fusion semi-continu un procédé ou un four de fusion dans lequel une partie de la charge est ajoutée ou soustraite au cours du cycle de fusion.

Les flammes impactantes résultent de la combustion d'un combustible avec un comburant (i.e. un oxydant de combustion).

Le combustible peut être un combustible solide, liquide ou gazeux.

Le combustible est avantageusement un combustible gazeux. Un tel combustible gazeux peut être un combustible carboné, un combustible non-carboné ou un mélange de combustible carboné et de combustible non-carboné. Ainsi, le combustible peut en particulier être choisi parmi les combustibles gazeux suivants : gaz naturel, hydrogène, ammoniac, gaz de synthèse, biogaz, tout gaz contenant de l'hydrogène et/ou du monoxyde de carbone, et les combinaisons d'au moins deux de ces combustibles gazeux.

Pour des raisons environnementales, les combustibles non-carbonés et les combustibles renouvelables à faible empreinte carbone.

Le comburant/oxydant présente typiquement une teneur en oxygène de 16% à 100% en volume. Les comburants/oxydants plus riches en oxygène, par exemple avec une teneur en oxygène d'au moins 90% en volume, sont typiquement plus efficaces et permettent de réaliser des flammes plus chaudes, étant donné leur faible teneur, voire l'absence, de gaz ballast qui ne participe pas à la combustion. Toutefois, pour certaines applications, un comburant/oxydant avec une teneur en ballast plus élevée, générant typiquement des flammes plus diluées, peut être préférable.

Afin de générer les flammes dirigées vers la surface libre du talus d'infondus, le four est équipé d'au moins un brûleur.

Le four peut être équipé d'au moins un brûleur qui génère plusieurs flammes qui sont dirigées vers et impactent la surface libre. Le four peut être équipé d'au moins un brûleur qui génère une seule flamme qui est dirigée vers et impacte la surface libre. Le four peut également être équipé d'une combinaison d'au moins un brûleur qui génère plusieurs flammes qui sont dirigées vers et impactent la surface libre et d'au moins un brûleur. Suivant une forme de réalisation utile, le four est équipé de plusieurs brûleurs générant chacun une seule flamme dirigée vers la surface libre. Un brûleur du four peut ainsi générer une seule flamme impactante ou plusieurs flammes impactantes. Le four peut également être équipé d'une combinaison de brûleurs, dont au moins un tel brûleur générant une seule flamme et au moins un tel brûleur générant plusieurs flammes.

Pour la mise en œuvre du procédé, le four de fusion est généralement équipé :
- d'une ou plusieurs enfourneuses pour introduire les infondus dans le four ;
- d'un ou plusieurs dispositifs de combustion, et notamment un ou plusieurs brûleurs, pour générer les flammes dirigées vers la surface libre ;
- d'une unité de régulation permettant :
   ∘ de réguler la puissance des flammes et
   ∘ de réguler l'impulsion des flammes.

Pour la mise en œuvre de formes de réalisation particulières du procédé suivant l'invention, le four peut également être équipé d'un ou plusieurs des équipements suivants :
- un détecteur pour détecter la position d'une ou plusieurs sections de la surface libre, de préférence d'une ou plusieurs sections de la surface libre correspondant à une zone d'impact défini par une flamme impactant la surface libre ; et
- une unité de contrôle permettant de comparer la position détectée à une distance d'avancement prédéfinie et/ou pour comparer la position détectée à une distance de recul prédéfinie pour la section correspondant à une zone d'impact et pour transmettre un signal de contrôle à l'unité de régulation pour la régulation de la puissance et de l'impulsion de la flamme correspondant à la zone d'impact de la section sur la base de cette comparaison.

Comme indiqué ci-dessus, le procédé peut être un procédé continu, donc avec un four de fusion continu, un procédé discontinu, donc avec un four de fusion discontinu ou un procédé semi-continu, c'est-à-dire avec un four semi-continu.

Dans le cas d'un procédé discontinu ou semi-continu, le procédé de fusion peut également comporter une étape pendant laquelle le talus est en substance ou totalement fondus et pendant laquelle il n'y a pas de surface libre sur laquelle des flammes définissent des zones d'impact. Selon le cas, il peut ne pas y avoir de la combustion dans le four pendant cette étape (en particulier quand cette étape est courte et/ou les pertes thermiques du four sont faibles) ou un certain niveau de combustion (généralement plus faible) est maintenu afin d'affiner la charge fondue ou de la maintenir à la température requise au-dessus de la température de fusion de la charge.

Les flammes impactantes peuvent être dirigées vers la surface libre du talus à partir de différents éléments du four. Ainsi, une flamme peut être dirigée vers la surface libre à travers la paroi aval, à travers une paroi latérale ou à travers la voûte du four. Une combinaison de telles flammes impactantes peut également être utilisée. Par exemple, la ou les flammes impactantes qui correspondent à une zone d'impact qui n'est pas adjacente à une des parois latérales peuvent être dirigées vers la surface libre à travers la paroi aval ou à travers la voûte, alors que les flammes impactantes qui correspondent à une zone d'impact adjacente à une des parois latérales sont dirigées vers la surface libre à travers cette paroi latérale adjacente.

En ce qui concerne les flammes définissant une zone d'impact adjacente à une paroi latérale, il convient d'éviter que cette flamme soit en partie dirigée vers ou impacte cette paroi latérale, car un tel impact est susceptible d'endommager ladite paroi.

A cette fin, il peut être utile d'utiliser des flammes de section transversale différente pour les zones d'impact adjacentes à une des parois latérales et pour la ou les zones d'impact non-adjacentes à une paroi latérale. Par exemple, suivant une forme de réalisation, la ou les zones d'impact qui ne sont pas adjacentes à une paroi latérale sont définies par des flammes étagées symétriques avec des injections de réactif de combustion étagé positionnées de manière symétrique par rapport à la ou les injections primaires, alors que les zones d'impact adjacentes à une paroi latérale sont définies par des flammes étagées asymétriques avec une ou des injections de réactif de combustion étagé positionnées uniquement du côté de la ou des injections primaires à l'opposé de cette paroi latérale adjacente.

Le procédé suivant l'invention est de préférence un procédé pour la fusion de verre, un procédé pour la fusion d'émail, un procédé pour la fusion de métal non-ferreux, comme l'aluminium, le plomb, le cuivre, etc., et en particulier un tel procédé pour la seconde fusion de métal non-ferreux, plus particulièrement dans le contexte d'un recyclage d'un ou plusieurs métaux non-ferreux, pour la fusion de liant hydraulique ou pour la vitrification de déchets. Par conséquent, le four est de préférence un four choisi parmi les fours de fusion de verre, les fours de fusion d'émail, les fours de fusion de métal non-ferreux, les fours de fusion d'un liant hydraulique et les fours de vitrification de déchets.

Suivant une forme de réalisation particulièrement préférée de la présente invention, l'une quelconque des formes de réalisation décrites ci-dessus peut être combinée avec le procédé tel que décrit dans la demande de brevet française FR2405259 déposée le 23 mai 2024 selon lequel des flammes sont dirigées vers la surface libre de manière à définir des zones d'impact sur la surface libre qui se situent à au moins deux niveaux verticaux différents. Une telle combinaison présente non seulement l'avantage d'une meilleure répartition du transfert d'énergie thermique par les flammes vers les infondus dans le talus sur la largeur l du four, résultant de la présente invention, mais également une meilleure répartition du transfert d'énergie thermique par les flammes vers les infondus dans le talus sur la hauteur h du talus et donc un contrôle encore plus efficace de la fusion des infondus au niveau du front de fusion du talus.

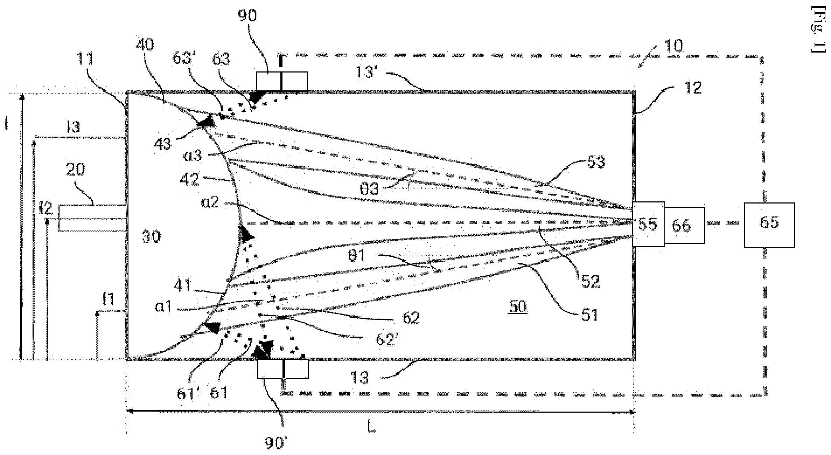

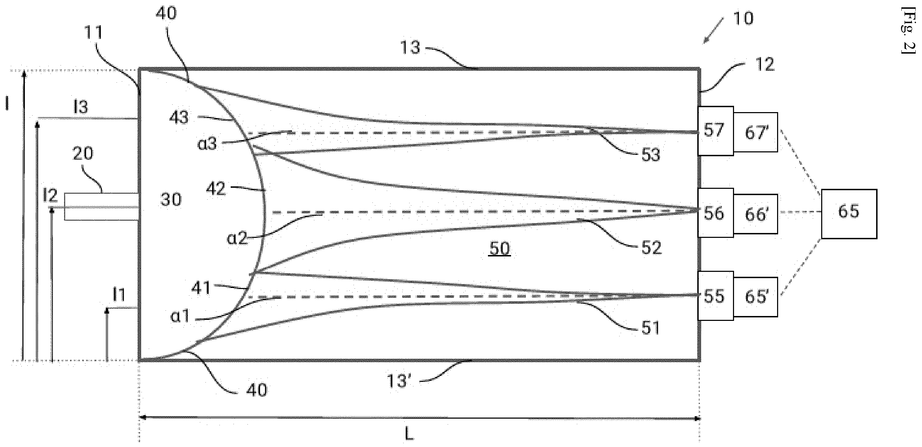

La présente invention et ses avantages seront mieux compris à la lumière de l'exemple non-limitatif ci-après, référence étant faite aux figures 1 et 2 qui sont des représentations schématiques, en coupe, vue d'en haut, de deux formes de réalisation d'un four dans lequel le procédé suivant l'invention est mise en œuvre.

La figure 1 montre plus particulièrement un four continu 10 pour la fusion de verre.

Le four 10 présente une paroi amont 11, à travers de laquelle les infondus (c'est-à-dire la composition vitrifiable solide) sont introduits dans le four 10, et une paroi aval 12 à l'opposé de la paroi amont 11 et à travers de laquelle le verre fondu 50 est évacué du four 10.

Deux parois latérales 13, 13' relient la paroi amont 11 et la paroi aval 12.

Le four 10 présente également une voûte et une sole (non-illustrées dans les figures), la zone de fusion se situant entre la paroi amont 11, la paroi aval 12, les parois latérales 13 et 13', la voûte et la sole.

La composition vitrifiable solide est composée de ou comporte des particules de petites tailles à faible conductivité thermique en comparaison avec la conductivité thermique des métaux. Ces particules ne transmettent donc pas ou peu d'énergie thermique entre elles.

Les infondus sont introduits dans le four 10 à travers la paroi amont 11, par exemple au moyen d'une vis sans fin 20. Dans la forme de réalisation illustrée, cette enfourneuse 20 se trouve au milieu de la paroi amont 11. Les infondus forment, à l'intérieur du four 10, un tas en forme de talus 30 qui s'étend au-dessus du verre fondu 50. Du côté amont du four 10, le talus 30 d'infondus s'appuie contre la paroi amont 11. Vers l'aval, le talus 30 se termine en une surface libre 40 inclinée par rapport à la verticale et bombée vers la paroi aval 12.

Pour la chauffe et la fusion des infondus, la surface libre 40 est attaquée par les flammes 51, 52, 53 positionnées en éventail et générées par le brûleur 55 monté dans la paroi aval 12. La surface libre 40 forme par conséquent un front de fusion pour les infondus dans le four 10.

Le four 10 illustré dans la figure 1 est un four de petite taille.

Les fours du type illustré sont de forme parallélépipédique et ont généralement une longueur L (entre la paroi amont 11 et la paroi aval 12) inférieure à 10 mètres, une largeur l (entre la paroi latérale 13 et la paroi latérale 13') inférieure à 5 mètres et une hauteur inférieure à 3 mètres.

Le talus 30 à fondre se trouve du côté de la paroi amont 11 et le brûleur 55 sur la paroi aval 12 opposée. Le brûleur 55 est choisi pour émettre une longueur de flamme en adéquation avec la longueur du four 10. La matière fondue 50 se déplace sur la sole du four 10 dans la direction du brûleur 55 en dessous duquel se trouve un trou de sortie (non-illustré) de la matière fondue 50. La matière fondue 50 se déplace de ce fait, sous les flammes 51, 52, 53 qui la maintiennent fondue jusqu'à sa sortie du four 10.

Pour les fours de plus grande taille, le talus 30 à fondre reste du côté de la paroi amont 11, mais des brûleurs additionnels sont ajoutés. Ces brûleurs additionnels peuvent, par exemple, être installés sur les parois latérales 13, 13' reliant la paroi amont 11 et la paroi aval 12, en voûte ou dans la sole, pour des brûleurs dits « brûleurs submergés ».

Chaque flamme 51, 52, 53 définit une zone d'impact 41, 42, 43 sur la surface libre 40 et y provoque la fusion des infondus.

Les flammes 51, 52, 53 sont dirigées vers la surface libre 40 suivant des directions différentes α1, α2, α3 (représentées par les axes des flammes 51, 52, 53) formant des angles aigus (≥ 0°) θ1, θ2, θ3 différents avec le plan vertical à travers l'axe longitudinale du four. De cette manière, les zones d'impact 41, 42, 43 respectives des flammes 51, 52, 53 se situent chacune à une distance différente 11, l2, l3 de la première paroi latérale 13 (et par conséquent également à une distance différente de la deuxième paroi latérale 13'). Dans le cas illustré, la direction α2 de la flamme 52 se situe dans le plan vertical comportant l'axe longitudinal du four 10 et les directions α1 et α3 des flammes 51, respectivement 53, se situe de côté et autre de ce plan vertical et forment des angles aigus avec ce plan vertical. Dans la forme de réalisation illustrée dans la figure 1, l'angle θ2 est donc de 0° et par conséquent pas visible sur la figure.

En fonction de la largeur l du four 10 et de la dimension horizontale des flammes 51, 52, 53, un plus grand nombre de flammes impactantes peut être nécessaire pour que les zones d'impact 41, 42, 43 couvrent suffisamment bien la surface libre 40 du talus 30 sur toute la largeur l du four. Le cas échéant, des brûleurs additionnels peuvent être installés dans le four 10 afin de générer ces flammes supplémentaires.

Comme illustré dans la figure 2, il est également possible d'utiliser un brûleur 55, 56, 57 par flamme impactante 51, 52, 53. Selon la figure 2, chaque flamme impactante 51, 52, 53 présente une direction α1, α2, α3 parallèle au parois latérales 13, 13' et donc également parallèle au plan vertical susmentionné.

Toutefois, d'autres configurations peuvent être envisagées. Par exemple, suivant une forme de réalisation non-illustrée, la flamme 52 est généré par un brûleur 56 situé dans la paroi aval 12 et présente une direction α2 telle que montrée dans la figure 2. Par contré, la flamme 53 est générée par un brûleur 57 monté dans la paroi latérale 13, mais la direction α3 de la flamme 53 est choisie telle que cette flamme 53 définisse la même zone d'impact 43 comme dans la figure 2, la flamme 51 étant générée par un brûleur 55 monté dans l'autre paroi latérale 13', la direction α1 de la flamme 51 étant choisie telle que cette flamme 51 définisse la même zone d'impact 41 comme dans la figure 2.

L'énergie thermique transférée aux infondus dans le talus 30 par chaque flamme 51, 52, 53 via sa zone d'impact respective 41, 42, 43 est régulée en régulant la puissance de la flamme correspondante 51, 52, 53. En régulant la puissance des flammes 51, 52, 53, on régule également la vitesse de fusion des infondus au niveau de la zone d'impact correspondante 41, 42, 43. Cela permet notamment d'éviter que la surface libre 40 avance trop vers la paroi aval 12 au niveau de cette zone d'impact 41, 42, 43, voire que la surface 40 recule trop vers la paroi amont 11 au niveau de cette zone d'impact 41, 42, 43.

L'impulsion de chaque flamme 51, 52, 53 est également régulée. Cette impulsion est plus particulièrement régulée de manière à ce que les flammes 51, 52, 53, d'une part, impactent la surface libre 40 du talus 30, ce qui permet un chauffage plus efficace des infondus, et, d'autre part, ne dégradent pas mécaniquement l'intégrité structurelle du talus 30.

Etant donné que l'impulsion des flammes 51, 52, 53 est régulée de manière à ce que lesdites flammes 51, 52, 53 impactent la surface libre 40, les flammes qui correspondent à des zones d'impact les plus éloignées de la racine de la flamme/du brûleur 55, 56, 57 ont typiquement des impulsions plus fortes que les flammes qui correspondent à des zones d'impact plus proches de la racine de la flamme/du brûleur 55, 56, 57.

Comme indiqué précédemment, dans le présent contexte, distinction est faite entre, d'une part, le changement du talus par la fusion des infondus et, d'autre part, la dégradation mécanique de l'intégrité structurelle du talus par des flammes à impulsion élevée, notamment par l'entraînement mécanique non-maîtrisé d'infondus du talus par de telles flammes et/ou par les fumées/gaz de combustion générées par de telles flammes.

Pour la régulation de l'impulsion des flammes 51, 52, 53, compte est donc tenu de la distance entre la surface libre 40 et la racine des flammes 51, 52, 53/la sortie du ou des brûleurs 55, 56, 57 générant les flammes 51, 52, 53 et de la nature des infondus.

Ainsi, quand le talus consiste en des morceaux de métal non-ferreux de taille et de poids importants qui sont difficiles à entraîner, l'impulsion des flammes peut être relativement élevée.

Par contre, quand le talus consiste en ou comporte des infondus en forme de particules légères/de fines/de poudres, comme dans la forme de réalisation illustrée, et en particulier de telles fines/de tels poudres qui ne collent pas ensemble lors de leur entrée dans le four, l'impulsion des flammes impactantes doit rester assez faible afin d'éviter un tel entraînement ou afin d'éviter un entraînement important desdites particules.

Il est rappelé qu'un tel entraînement peut résulter en :
(i) la présence d'infondus dans la charge fondue évacuée du four ou en une charge fondue insuffisamment affinée, ce qui peut poser des problèmes dans les procédés en aval de l'étape de fusion, tels que le façonnage de produits solide à partir de la charge fondue, et à une réduction de la qualité des produits solides fabriqués ;
(ii) la dégradation de l'intérieur du four, par exemple : érosion des parois par les infondus entraînés et formation de dépôts sur des brûleurs ou d'autres équipements en contact avec l'intérieur du four ; et/ou
(iii) la perte d'infondus évacués du four avec les fumées de combustion. Une telle perte de matières premières est évidemment coûteuse. Elle peut également causer des blocages des conduits pour l'évacuation des fumées et une saturation accélérée des filtres utilisés pour le traitement des fumées en amont de la cheminée. Quand le four comporte un système pour la récupération d'énergie thermique des fumées évacuées, la présence d'infondus dans les fumées pose également des problèmes pour la récupération de chaleur dans les récupérateurs ou régénérateurs utilisés. Ce qui plus est, quand la charge est un mélange de différents ingrédients, comme c'est notamment le cas pour les procédés de fusion de verre, l'évacuation d'infondus avec les fumées de combustion peut être sélective, avec des niveaux d'évacuation différents pour différents ingrédients. Dans ce cas, la composition de la charge fondue obtenue ne correspond pas à celle qui découle de la composition des infondus introduits dans le four, avec des conséquences évidentes pour les procédés de traitement de la charge fondue en aval du four et de sur les propriétés du produit final obtenu.

Des brûleurs permettant une telle double régulation, d'une part, de la puissance de la ou des flammes générées et, d'autre part, de l'impulsion de la ou des flammes générées sont connus. De tels brûleurs sont par exemple décrits dans WO-A-2010/003866. Un tel brûleur permet, par exemple, de modifier la puissance de la flamme à impulsion constante ou de modifier l'impulsion de la flamme à puissance constante.

Il est généralement souhaitable de détecter une ou plusieurs caractéristiques du procédé de fusion permettant d'optimiser le procédé de fusion.

Suivant une forme de réalisation avantageuse, des faisceaux électromagnétiques, et notamment des faisceaux laser, sont utilisés pour détecter la position de la surface libre 40 dans le four 10, de préférence dans une section correspondant à une ou des zones d'impact 41, 42, 43 pendant le procédé de fusion.

Suivant la forme de réalisation illustrée dans la figure 1, un faisceau électromagnétique 61, 62, 63 plus particulièrement un faisceau laser est émis par une unité d'émission/détection 90, 90' montée dans les parois latérales 13, 13' et dirigé vers une section de la surface libre 40 du talus 30. Le rayon est reflété par cette section de la surface libre 40 et le rayon reflété 61', 62', 63' est détecté par l'unité d'émission/détection 90, 90'. La position de la section de la surface libre 40 qui reflète le rayon laser 61, 62, 63 est déterminée par l'unité d'émission/détection 90, 90' sur la base de l'écart de temps entre l'émission du rayon laser 61, 62, 63 et la détection de sa réflexion 61', 62', 63', cet écart de temps étant une mesure pour la distance traversée par le rayon entre son émission et sa détection. Un signal correspondant à la position de la section concernée de la surface libre 40 est transmis par l'unité d'émission/détection 90, 90' à l'unité de contrôle 65.

L'unité de contrôle 65 compare la position détectée par l'unité d'émission/détection 90, 90' à une distance d'avancement prédéfinie et/ou une distance de recul prédéfinie pour cette section, de préférence à une distance d'avancement prédéfinie et à une distance de recul prédéfinie.

S'il découle de cette comparaison que la section de la surface libre 40 a atteint la distance d'avancement prédéfinie, ce qui correspond à un rapprochement entre cette section de la surface libre 40 vers la sortie du four 10, l'unité de contrôle 65, transmet un signal de contrôle à l'unité de régulation 66, 65', 66', 67' du brûleur 55, 56, 57 pour que la puissance de la flamme 51, 52, 53 qui correspond à une zone d'impact 41, 42, 43 dans cette section soit augmentée, ce qui permet d'accélérer la fusion des infondus au niveau de cette section de la surface libre 40, provoquant ainsi un recul de cette section vers la surface amont 11 du four 10.

Si, par contre, il découle de cette comparaison que la section de la surface libre 40 n'atteint pas la distance de recul prédéfinie, ce qui correspond à un recul de section de la surface libre 40 vers la paroi amont 11 du four, l'unité de contrôle 65 transmet un signal de contrôle à l'unité de régulation 66, 65', 66', 67' du brûleur 55, 56, 57 pour que la puissance de la flamme 51, 52, 53 qui correspond à une zone d'impact 41, 42, 43 dans cette section soit réduite, ce qui permet de ralentir la fusion des infondus dans cette section et à terme, notamment avec l'introduction d'infondus additionnels dans le four 10, d'amener cette section de la surface libre 40 vers sa position recherchée.

Si nécessaire, l'unité de régulation 66, 65', 66', 67' ajustera en même temps l'impulsion de la ou des flammes concernées de manière à ce que ces flammes impactent effectivement la surface libre 40 du talus 30 dans la section à sa position réelle et ceci sans dégradation mécanique par la flamme 51, 52, 53 de l'intégrité structurelle du talus 30.

## Revendications

1. Procédé de fusion dans un four (10) présentant une zone de fusion située entre une paroi amont (11), une paroi aval (12) à l'opposé de la paroi amont (11), une première paroi latérale (13) et une deuxième paroi latérale (13'), les deux parois latérales (13, 13') reliant la paroi amont (11) et la paroi aval (12), une voûte et une sole, la distance entre la paroi amont (11) et la paroi aval (12) définissant la longueur L du four (10) et la distance entre les deux parois latérales (13, 13') définissant la largeur l du four (10) ;
procédé dans lequel :
• des infondus sont introduits dans le four (10) à travers ou du côté de la paroi amont (11) par une ou plusieurs enfourneuses (20) ;
• dans le four (10), les infondus forment un talus (30) s'appuyant d'un côté contre la paroi amont (11) et présentant du côté opposé une surface libre (40) inclinée par rapport à la verticale ;
• les infondus dans le talus (30) sont chauffés au moyen de flammes (51, 52, 53) avec obtention d'une charge fondue (50) ; et
• la charge fondue (50) est évacuée du four à travers d'une sortie dans ou du côté de la paroi aval (12);
**caractérisé en ce que** :
• au moins trois flammes (51, 52, 53) sont dirigées vers la surface libre (40) de manière à définir sur cette surface libre (40) des zones d'impact (41, 42, 43) à au moins trois distances (11, 12, 13) différentes de la première paroi latérale (13) ;
• l'énergie thermique transférée au talus (30) par chaque flamme (51, 52, 53) dans sa zone d'impact respective (41, 42, 43) est régulée en régulant la puissance de la flamme (51, 52, 53) ; et
• l'impulsion de chaque flamme (51, 52, 53) est régulée de manière à ce que la flamme (51, 52, 53) impacte la surface libre (40) dans sa zone d'impact (41, 42, 43) sans dégradation mécanique par la flamme (51, 52, 53) de l'intégrité structurelle du talus (30) dans cette zone d'impact (41, 42, 43).

2. Procédé suivant la revendication 1, dans lequel au moins quatre flammes (51, 52, 53) sont dirigées vers la surface libre (40) de manière à définir sur cette surface libre (40) des zones d'impact (41, 42, 43) à au moins quatre distances (l1, l2, l3) différentes de la première paroi latérale (13), de préférence au moins cinq flammes (51, 52, 53) sont dirigées vers la surface libre (40) de manière à définir sur cette surface libre (40) des zones d'impact (41, 42, 43) à au moins cinq distances (11, l2, l3) différentes de la première paroi latérale (13).

3. Procédé suivant l'une quelconque des revendications précédentes, dans lequel les distances (l1, l2, l3) sont réparties sur toute la largeur l du four.

4. Procédé suivant l'une quelconque des revendications précédentes, dans lequel les distances (11, l2, l3) sont réparties de manière symétrique sur la largeur l du four par rapport au milieu de cette largeur l.

5. Procédé suivant l'une quelconque des revendications précédentes, dans lequel chaque zone d'impact (41, 42, 43) recouvre partiellement la zone d'impact (41, 42, 43) la plus proche.

6. Procédé suivant l'une quelconque des revendications précédentes, dans lequel la ou les flammes (51, 52, 53) correspondant à une zone d'impact (41, 42, 43) qui n'est pas adjacente à une paroi latérale présentent une section transversale avec une dimension horizontale et une dimension verticale, la dimension horizontale étant plus grande que la dimension verticale.

7. Procédé suivant l'une des revendications 5 et 6, dans lequel ladite section transversale est rectangulaire.

8. Procédé suivant l'une quelconque des revendications précédentes, dans lequel les flammes (51, 52, 53) sont des flammes à injection étagée de combustible et/ou de comburant.

9. Procédé suivant l'une quelconque des revendications précédentes, dans lequel on détecte une position d'une section de la surface libre (40), la section correspondant de préférence à une zone d'impact (41, 42, 43).

10. Procédé suivant la revendication 9, dans lequel on détecte la position de plusieurs sections de la surface libre (40), de préférence de chaque section de la surface libre (40) correspondant à une zone d'impact (41, 42, 43).

11. Procédé suivant l'une quelconque des revendications précédentes, dans lequel on détecte si une section de la surface libre (40) correspondant à une zone d'impact (41, 42, 43) atteint une distance d'avancement prédéfinie et dans lequel on augmente la puissance de la flamme (51, 52, 53) correspondant à cette zone d'impact (41, 42, 43) quand la section atteint cette distance d'avancement prédéfinie.

12. Procédé suivant l'une quelconque des revendications précédentes, dans lequel on détecte si une section de la surface libre (40) correspondant à une zone d'impact (41, 42, 43) atteint une distance de recul prédéfinie et dans lequel on réduit la puissance de la flamme (51, 52, 53) correspondant à cette zone d'impact (41, 42, 43) quand la section n'atteint pas cette distance de recul prédéfinie.

13. Procédé suivant l'une quelconque des revendications précédentes, dans lequel le procédé est un procédé continu, discontinu ou semi-continu.

14. Procédé suivant l'une quelconque des revendications précédentes pour la fusion de verre, d'émail, de métal non-ferreux, de liant hydraulique ou pour la vitrification de déchets.
